# EUROPEAN PATENT APPLICATION

(11) **EP 4 726 575 A1**
(43) Date of publication of application: **15.04.2026**
(21) Application number: 25186178.7
(22) Date of filing: 30.06.2025
(51) Int. Cl.: G06F 16/3329, G06F 16/338, G06F 16/335

(54) **DIGITAL CONTENT GENERATION METHOD AND DIGITAL CONTENT GENERATION SYSTEM**

(30) Priority: 08.10.2024 TW 113138260
(71) Applicant: Acer Incorporated, New Taipei City 221 (TW); Winking Entertainment Corporation, Taipei City, Taiwan (R.O.C.) (TW)
(72) Inventor: HSU, Wen-Cheng, New Taipei City (TW); LIU, Tung-Mei, Taipei City (TW)
(74) Representative: Haseltine Lake Kempner LLP

(57) **Abstract**

A digital content generation method and a digital content generation system (10) are disclosed. The method includes: establishing a style description database (101); obtaining identity identification data (201, 401, 501) corresponding to a target user (21, 41, 51, 61, 62); obtaining style description data (202, 402, 502, 611, 621) corresponding to the target user (21, 41, 51, 61, 62) from the style description database (101) according to the identity identification data (201, 401, 501); and affecting an output of an artificial intelligence model (102) by using the style description data (202, 402, 502, 611, 621), enabling the artificial intelligence model (102) to generate a digital content (203, 403, 503, 612, 622) having a specific style.

## Description

### BACKGROUND

### Technical Field

This disclosure relates to a digital content generation method and a digital content generation system.

### Description of Related Art

With the advancement of technology, artificial intelligence models for automatically generating digital content such as images are also widely used to improve people's daily life experience and/or work efficiency. However, if a single manufacturer or single user wants to use an artificial intelligence model to generate digital content having their own unique style, they need to find ways to train and maintain their own artificial intelligence model by themselves, so that the trained artificial intelligence model has the ability to generate digital content having their own unique style. In general, this approach will significantly increase the operating costs of enterprises, and the acquisition of training materials is also a troublesome problem. On the other hand, if one wants to use artificial intelligence models trained by others to generate digital content, due to the limitations of the universality of training materials, the trained artificial intelligence models also cannot generate digital content that satisfies the unique style of specific manufacturers or users.

### SUMMARY

The disclosure provides a digital content generation method and a digital content generation system, capable of improving the above problems.

An embodiment of the disclosure provides a digital content generation method, which includes the following. A style description database is established. Identity identification data corresponding to a target user is obtained. According to the identity identification data, style description data corresponding to the target user is obtained from the style description database. The style description data is used to affect output of an artificial intelligence model, enabling the artificial intelligence model to generate digital content having a specific style.

An embodiment of the disclosure further provides a digital content generation system, which includes a storage device and a processor. The storage device is configured to store a style description database and an artificial intelligence model. The processor is coupled to the storage device. The processor is configured to establish the style description database; obtain identity identification data corresponding to a target user; according to the identity identification data, obtain style description data corresponding to the target user from the style description database; and use the style description data to affect an output of the artificial intelligence model, enabling the artificial intelligence model to generate digital content having a specific style.

Based on the above, after obtaining the identity identification data corresponding to the target user, according to the identity identification data, the style description data corresponding to the target user may be obtained from the style description database. Subsequently, by using the style description data to affect the output of the artificial intelligence model, the artificial intelligence model may be enabled to generate the digital content having a specific style. Thereby, even if multiple manufacturers or multiple users commonly use the same artificial intelligence model, this artificial intelligence model may also generate the digital content having their own unique style for individual manufacturers or individual users.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram of a digital content generation system according to an embodiment of the disclosure.
FIG. 2 is a schematic diagram of an operation process of a digital content generation method according to an embodiment of the disclosure.
FIG. 3 is a schematic diagram of style description data stored in a style description database according to an embodiment of the disclosure.
FIG. 4 is a schematic diagram of an operation process of a digital content generation method according to an embodiment of the disclosure.
FIG. 5 is a schematic diagram of an operation process of a digital content generation method according to an embodiment of the disclosure.
FIG. 6 is a schematic diagram of digital content having different styles generated based on different style description data according to an embodiment of the disclosure.
FIG. 7 is a flowchart of a digital content generation method according to an embodiment of the disclosure.

### DESCRIPTION OF THE EMBODIMENTS

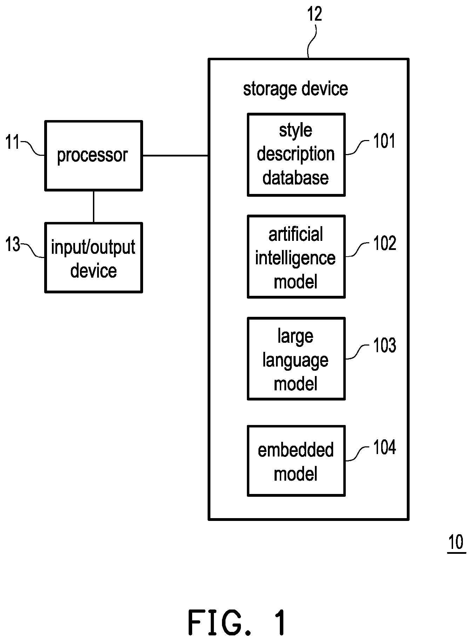

FIG. 1 is a schematic diagram of a digital content generation system according to an embodiment of the disclosure. Referring to FIG. 1, a digital content generation system 10 may be applied or disposed in various electronic devices supporting image processing functions such as smartphones, tablet computers, notebook computers, desktop computers, servers, gaming consoles, or in-vehicle computers, and the type of the electronic devices is not limited thereto.

The digital content generation system 10 includes a processor 11, a storage device 12, and an input/output (I/O) device 13. The processor 11 is configured to be responsible for overall or partial operation of the digital content generation system 10. For example, the processor 11 may include a central processing unit (CPU), a graphic processing unit (GPU), or other programmable general-purpose or special-purpose microprocessors, digital signal processor (DSP), programmable controllers, application specific integrated circuits (ASIC), programmable logic device (PLD), or other similar devices or combinations of these devices.

In one embodiment, the processor 11 may further include a vision processing unit (VPU), a neural network processing unit (NPU), and/or a tensor processing unit (TPU) and other processors dedicated to assist in performing neural network operations and/or image processing. Furthermore, the disclosure does not limit the number and type of the processor 11.

The storage device 12 is coupled to the processor 11 and is configured to store data. For example, the storage device 12 may include volatile storage circuits and non-volatile storage circuits. The volatile storage circuits are configured to store data in a volatile manner. For example, the volatile storage circuits may include random access memory (RAM) or similar volatile storage media. The non-volatile storage circuits are configured to store data in a non-volatile manner. For example, the non-volatile storage circuits may include read only memory (ROM), solid state disk (SSD), hard disk drive (HDD), or similar non-volatile storage media. Furthermore, the disclosure does not limit the number and type of the storage device 12.

The input/output device 13 is coupled to the processor 11 and is configured to receive input signals or transmit output signals. For example, the input/output device 13 may include power management circuits, network interface cards, mice, keyboards, speakers, and microphones. Furthermore, the disclosure does not limit the number and type of the input/output device 13.

In one embodiment, the processor 11 may be configured to establish a style description database 101. For example, the style description database 101 may be stored in the storage device 12. The style description database 101 is configured to store multiple style description data corresponding to different users. For example, one user may correspond to one or more style description data. Different users may correspond to different style description data. In one embodiment, the style description data in the style description database 101 may also be classified by different projects. For example, one project may correspond to one or more style description data. Different projects may correspond to different style description data.

In one embodiment, the processor 11 is further configured to establish an artificial intelligence model 102. For example, the artificial intelligence model 102 may be stored in the storage device 12. The artificial intelligence model 102 is configured to generate digital content. For example, the artificial intelligence model 102 may be implemented through neural network architectures such as deep neural network (DNN), convolutional neural network (CNN), recurrent neural network (RNN), or other types of algorithm architectures. In one embodiment, the artificial intelligence model 102 may also include machine learning (ML) models and/or deep learning (DL) models. The digital content may include images and/or sounds. In one embodiment, the artificial intelligence model 102 may be trained to improve the quality of the digital content generated by the artificial intelligence model 102.

In one embodiment, the processor 11 may use the style description data in the style description database 101 to affect the output of the artificial intelligence model 102, enabling the artificial intelligence model 102 to generate digital content having a specific style. For example, it is assumed that the subject of the digital content to be generated by the artificial intelligence model 102 is "runner". By using certain style description data in the style description database 101 to affect the output of the artificial intelligence model 102, the artificial intelligence model 102 may generate digital content having various styles such as "Japanese style", "American style", "soft", "passionate", "anime", or "realistic" and having the subject of "runner". However, both the subject and style of the digital content that may be generated by the artificial intelligence model 102 may be adjusted according to practice requirements, and the disclosure imposes no limitations thereon.

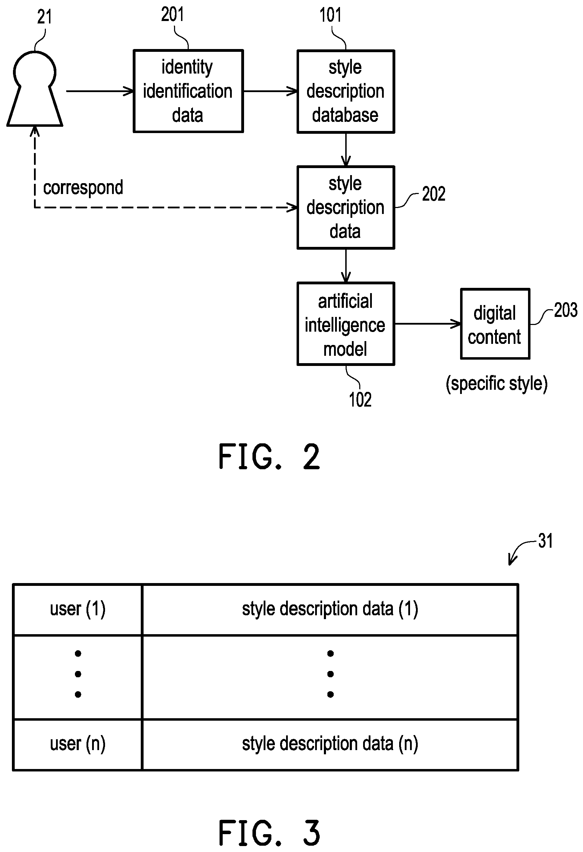

FIG. 2 is a schematic diagram of an operation process of a digital content generation method according to an embodiment of the disclosure. Referring to FIG. 2, in one embodiment, the processor 11 may obtain identity identification data 201 corresponding to a user (also called a target user) 21. The identity identification data 201 may be configured to identify the user 21. For example, the identity identification data 201 may include an identification code or other types of identification data, as long as it may be configured to identify the identity of the user 21. In addition, each user may perform identity identification through unique identity identification data.

In one embodiment, the processor 11 may obtain style description data 202 corresponding to the user 21 from the style description database 101 according to the identity identification data 201. The style description data 202 may be configured to control the style of digital content 203 to be generated by the artificial intelligence model 102. It should be noted that the style description data 202 does not affect the subject of the digital content 203 generated by the artificial intelligence model 102. Then, the processor 11 may use the style description data 202 to affect the output of the artificial intelligence model 102, enabling the artificial intelligence model 102 to generate the digital content 203 having a specific style.

FIG. 3 is a schematic diagram of style description data stored in a style description database according to an embodiment of the disclosure. Referring to FIG. 3, it is assumed that a description table 31 is stored in the style description database 101. The description table 31 records mapping relationships (or corresponding relationships) between a user (1) to a user (n) and style description data (1) to style description data (n). In one embodiment, a user (i) may manage (for example, upload or update) style description data (i) recorded in the description table 31 by themselves. i may be any integer from 1 to n.

In one embodiment, according to the identity identification data corresponding to the user (i), the processor 11 may query the style description database 101 (or the description table 31) to obtain the style description data (i) corresponding to the user (i). For example, the style description data 202 of FIG. 2 may include the style description data (i).

In one embodiment, it is assumed that the processor 11 obtains identity identification data (also called first identity identification data) corresponding to a user (j) (also called a first user). The processor 11 may obtain style description data (j) (also called first style description data) corresponding to the user (j) from the style description database 101 (or the description table 31) according to the first identity identification data. The style description data (j) may be configured to affect the output of the artificial intelligence model 101, enabling the artificial intelligence model 101 to generate digital content (also called first digital content) having a certain style (also called a first style).

In one embodiment, it is assumed that the processor 11 obtains identity identification data (also called second identity identification data) corresponding to a user (k) (also called a second user). j and k are both any integers from 1 to n, and j is different from k. The processor 11 may obtain style description data (k) (also called second style description data) corresponding to the user (k) from the style description database 101 (or the description table 31) according to the second identity identification data. The style description data (k) may be configured to affect the output of the artificial intelligence model 101, enabling the artificial intelligence model 101 to generate digital content (also called second digital content) having another style (also called a second style).

It should be noted that the subject of the first digital content may be the same as or different from the subject of the second digital content. However, the style of the first digital content (i.e., the first style) may be different from the style of the second digital content (i.e., the second style).

For example, in one embodiment, it is assumed that the subject of the first digital content and the subject of the second digital content are both "runner", the style of the first digital content (i.e., the first style) is "Japanese style", and the style of the second digital content (i.e., the second style) is "American style". In this example, the first digital content may present a "runner" having "Japanese style", while the second digital content may present a "runner" having "American style".

Alternatively, in one embodiment, it is assumed that the subject of the first digital content is "runner", the subject of the second digital content is "child", the style of the first digital content (i.e., the first style) is "Japanese style", and the style of the second digital content (i.e., the second style) is "American style". In this example, the first digital content may present a "runner" having "Japanese style", while the second digital content may present a "child" having "American style". It should be noted that both the subject and style of the digital content that may be generated by the artificial intelligence model 102 may be adjusted according to practice requirements, and the disclosure imposes no limitations thereon.

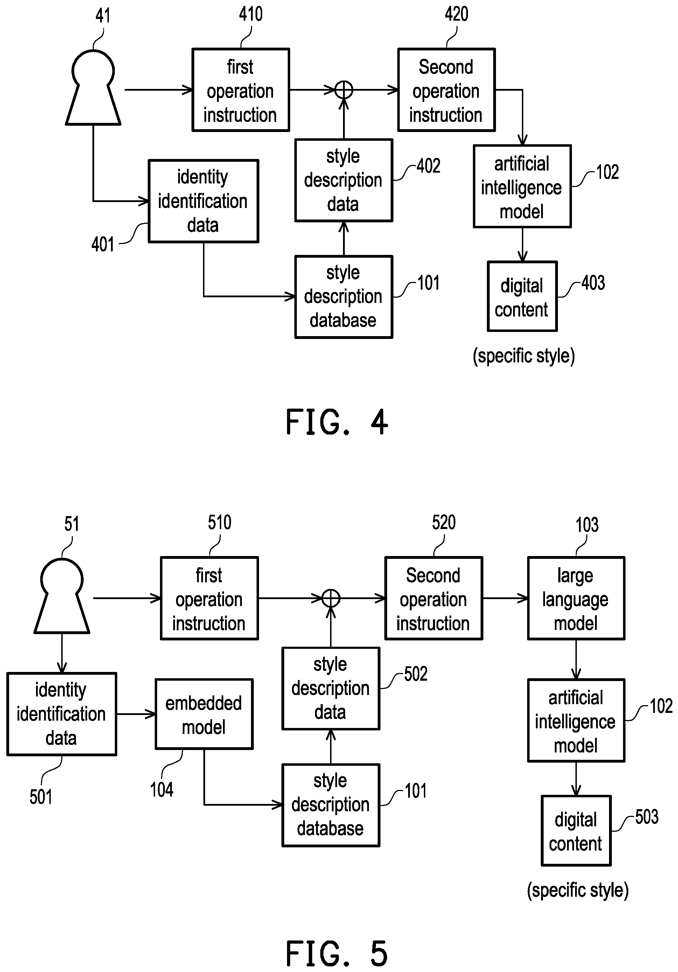

FIG. 4 is a schematic diagram of an operation process of a digital content generation method according to an embodiment of the disclosure. Referring to FIG. 4, in one embodiment, the processor 11 may obtain an operation instruction (also called a first operation instruction) 410 corresponding to a user 41 (i.e., target user) through the input/output device 13. The operation instruction 410 may be configured to control the subject of digital content 403 to be generated by the artificial intelligence model 102. For example, the operation instruction 410 may reflect that the user 41 desires that the subject of the digital content 403 generated by the artificial intelligence model 102 is "runner" or other subjects, and the disclosure imposes no limitations thereon.

On the other hand, the processor 11 may obtain identity identification data 401 corresponding to the user 41. The identity identification data 401 may be configured to identify the user 41. The processor 11 may obtain style description data 402 corresponding to the user 41 from the style description database 101 according to the identity identification data 401. The style description data 402 may be configured to control the style of the digital content 403 generated by the artificial intelligence model 102.

In one embodiment, the processor 11 may generate an operation instruction (also called a second operation instruction) 420 according to the operation instruction 410 and the style description data 402. For example, the processor 11 may add the style description data 402 to at least part of the instruction content originally carried by the operation instruction 410 to generate the operation instruction 420. Then, the processor 11 may instruct the artificial intelligence model 102 to generate the digital content 403 having a specific style based on the operation instruction 420. For example, the processor 11 may input the operation instruction 420 to the artificial intelligence model 102. The artificial intelligence model 102 may generate the digital content 403 having a style of "Japanese style" and a subject of "runner" according to the operation instruction 420. It should be noted that both the subject and style of the digital content 403 may be set and adjusted according to practice requirements, and the disclosure imposes no limitations thereon.

In one embodiment, the processor 11 may further establish a large language model (LLM) 103. For example, the large language model 103 may be stored in the storage device 12. In one embodiment, the processor 11 may process the second operation instruction through the large language model 103 to normalize the instruction content of the second operation instruction. For example, the processor 11 may normalize the instruction content of the second operation instruction (such as colloquial instruction content) through the large language model 103 to process or convert the instruction content of the second operation instruction into a format or pattern that the artificial intelligence model 102 may process. Then, the processor 11 may input the processed (i.e., normalized) second operation instruction to the artificial intelligence model 102 to instruct the artificial intelligence model 102 to generate digital content having a specific style.

In one embodiment, the processor 11 may further establish an embedded model 104. For example, the embedded model 104 may be stored in the storage device 12. In one embodiment, the processor 11 may process the obtained identity identification data through the embedded model 104 to normalize the data content of the identity identification data. For example, the processor 11 may normalize the data content of the identity identification data through the embedded model 104 to process or convert the data content of the identity identification data into a format or pattern that the style description database 101 may process. Then, the processor 11 may query the style description database 101 based on the processed (i.e., normalized) identity identification data to obtain the style description data.

FIG. 5 is a schematic diagram of an operation process of a digital content generation method according to an embodiment of the disclosure. Referring to FIG. 5, in one embodiment, the processor 11 may obtain an operation instruction 510 (i.e., a first operation instruction) corresponding to a user 51 (i.e., a target user) through the input/output device 13. The operation instruction 510 is configured to control the subject of digital content 503 generated by the artificial intelligence model 102. For example, the operation instruction 510 may reflect that the user 51 desires the subject of the digital content 503 generated by the artificial intelligence model 102 to be "runner" or other subjects, and the disclosure imposes no limitations thereon. On the other hand, the processor 11 may obtain identity identification data 501 corresponding to the user 51. The identity identification data 501 may be configured to identify the user 51.

In one embodiment, after obtaining the identity identification data 501, the processor 11 may normalize the data content of the identity identification data 501 through the embedded model 104 to process or convert the data content of the identity identification data 501 into a format or pattern that the style description database 101 may process. Then, the processor 11 may query the style description database 101 based on the processed (i.e., normalized) identity identification data 501 to obtain style description data 502. The style description data 502 may be configured to control the style of the digital content 503 to be generated by the artificial intelligence model 102.

In one embodiment, the processor 11 may generate an operation instruction 520 (i.e., a second operation instruction) according to the operation instruction 510 and the style description data 502. For example, the processor 11 may add the style description data 502 to at least part of the instruction content carried by the operation instruction 510 to generate the operation instruction 520.

In one embodiment, after obtaining the operation instruction 520, the processor 11 may normalize the instruction content of the operation instruction 520 through the large language model 103 to process or convert the instruction content of the operation instruction 520 into a format or pattern that the artificial intelligence model 102 may process. Then, the processor 11 may input the processed (i.e., normalized) operation instruction 520 to the artificial intelligence model 102 to indicate the artificial intelligence model 102 to generate the digital content 503 having a specific style. It should be noted that both the subject and style of the digital content 503 may be set and adjusted according to practice requirements, and the disclosure imposes no limitations thereon.

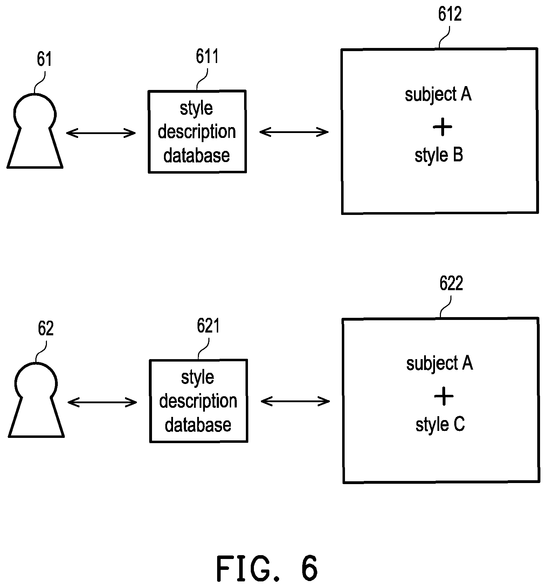

FIG. 6 is a schematic diagram of digital content having different styles generated based on different style description data according to an embodiment of the disclosure. Referring to FIG. 6, in one embodiment, it is assumed that the style description data obtained for a user 61 is style description data 611, and the style description data obtained for a user 62 is style description data 621.

In one embodiment, digital content 612 generated according to the style description data 611 may present a subject A having a style B. For example, assuming that the style B is "Japanese style" and the subject A is "runner," the digital content 612 may present a runner wearing a kimono, and cherry blossom petals may be scattered around the runner. In addition, the digital content 612 may also present any digital content with a "Japanese style" concept to modify the "runner" in the digital content 612.

On the other hand, digital content 622 generated according to the style description data 621 may present a subject A having a style C. For example, assuming that the style C is "American style" and the subject A is "runner," the digital content 622 may present a runner wearing a loose T-shirt, and the runner's arms and calves may have large tattoos. In addition, the digital content 622 may also present any digital content with an "American style" concept to modify the "runner" in the digital content 622.

It should be noted that in the embodiment of FIG. 6, the digital content 612 and 622 present the same subject (i.e., the subject A). However, based on the different style description data 611 and 621, the same subject (i.e., the subject A) presented by the digital content 612 and 622 may have completely different styles (i.e., the style B and the style C).

In one embodiment, a user (i.e., a target user) may operate an electronic device (such as a smartphone or personal computer) to send a first operation instruction and/or identity identification data to the digital content generation system 10. In one embodiment, a user (i.e., a target user) may upload his/her own identity identification data to a block chain network or online storage space in advance.

In one embodiment, after obtaining the first operation instruction sent by a user (i.e., a target user), according to the first operation instruction, the processor 11 may obtain identity identification data corresponding to the target user from a block chain network or online storage space. For example, the processor 11 may search for a message storage location belonging to the target user from the block chain network or online storage space according to the source of the first operation instruction and/or at least part of the message carried by the first operation instruction. Then, the processor 11 may download the identity identification data corresponding to the target user from this message storage location. The specific usage of the block chain network or online storage space belongs to existing technology, and will not be elaborated in the following.

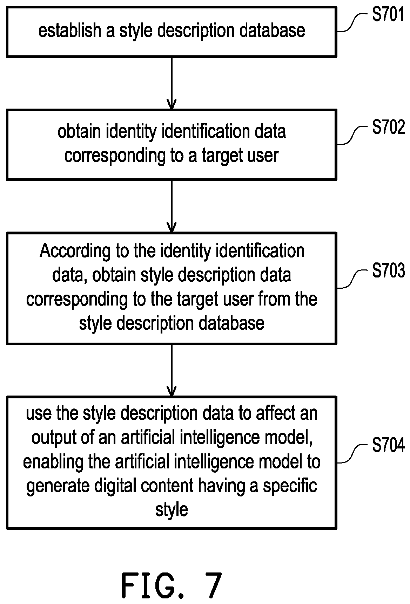

FIG. 7 is a flowchart of a digital content generation method according to an embodiment of the disclosure. Referring to FIG. 7, in step S701, a style description database is established. In step S702, identity identification data corresponding to a target user is obtained. In step S703, according to the identity identification data, style description data corresponding to the target user is obtained from the style description database. In step S704, the style description data is used to affect an output of an artificial intelligence model, enabling the artificial intelligence model to generate digital content having a specific style.

However, each step in FIG. 7 has been described in detail as above, and will not be elaborated in the following. It should be noted that each step in FIG. 7 may be implemented as multiple program codes or circuits, which the disclosure does not limit. In addition, the method of FIG. 7 may be used in conjunction with the above exemplary embodiments, or may be used independently, which the disclosure does not limit.

In summary, the digital content generation method and the digital content generation system proposed by the disclosure may enable different users to manage their respective exclusive style description data in a style description database. Subsequently, according to the identity identification data of a target user, the style description data corresponding to the target user may be obtained from the style description database. In particular, this style description data may be used to affect an output of an artificial intelligence model, enabling the artificial intelligence model to generate digital content having a specific style. Thereby, users do not need to actually participate in the maintenance (such as training) of the artificial intelligence model, and may still share the same artificial intelligence model to generate digital content having their respective unique styles.

## Claims

1. A digital content generation method, comprising:
establishing a style description database (101);
obtaining identity identification data (201, 401, 501) corresponding to a target user (21, 41, 51, 61, 62);
according to the identity identification data (201, 401, 501), obtaining style description data (202, 402, 502, 611, 621) corresponding to the target user (21, 41, 51, 61, 62) from the style description database (101); and
using the style description data (202, 402, 502, 611, 621) to affect output of an artificial intelligence model (102), and enabling the artificial intelligence model (102) to generate digital content (203, 403, 503, 612, 622) having a specific style.

2. The digital content generation method according to claim 1, wherein the style description database (101) is configured to store a plurality of style description data (202, 402, 502, 611, 621) corresponding to different users (21, 41, 51, 61, 62).

3. The digital content generation method according to claim 1, wherein obtaining the style description data (202, 402, 502, 611, 621) corresponding to the target user (21, 41, 51, 61, 62) from the style description database (101) according to the identity identification data (201, 401, 501) comprises:
according to first identity identification data (201, 401, 501), obtaining first style description data (202, 402, 502, 611, 621) corresponding to a first user (21, 41, 51, 61, 62) from the style description database (101), wherein the first style description data (202, 402, 502, 611, 621) is configured to affect the output of the artificial intelligence model (102) and enable the artificial intelligence model (102) to generate first digital content (203, 403, 503, 612, 622) having a first style; and
according to second identity identification data (201, 401, 501), obtaining second style description data (202, 402, 502, 611, 621) corresponding to a second user (21, 41, 51, 61, 62) from the style description database (101), wherein the second style description data (202, 402, 502, 611, 621) is configured to affect the output of the artificial intelligence model (102) and enable the artificial intelligence model (102) to generate second digital content (203, 403, 503, 612, 622) having a second style, and the first style is different from the second style.

4. The digital content generation method according to claim 1, wherein using the style description data (202, 402, 502, 611, 621) to affect the output of the artificial intelligence model (102), and enabling the digital content (203, 403, 503, 612, 622) generated by the artificial intelligence model (102) to have the specific style comprises:
obtaining a first operation instruction (410, 510) corresponding to the target user (21, 41, 51, 61, 62), wherein the first operation instruction (410, 510) is configured to control a subject of the digital content (203, 403, 503, 612, 622);
according to the first operation instruction (410, 510) and the style description data (202, 402, 502, 611, 621), generating a second operation instruction (420, 520), wherein the style description data (202, 402, 502, 611, 621) is configured to control a style of the digital content (203, 403, 503, 612, 622); and
based on the second operation instruction (420, 520), instructing the artificial intelligence model (102) to generate the digital content (203, 403, 503, 612, 622) having the specific style.

5. The digital content generation method according to claim 4, wherein instructing the artificial intelligence model (102) to generate the digital content (203, 403, 503, 612, 622) having the specific style based on the second operation instruction (420, 520) comprises:
processing the second operation instruction (420, 520) through a large language model (103) to normalize instruction content of the second operation instruction (420, 520); and
inputting the processed second operation instruction (420, 520) to the artificial intelligence model (102), so as to instruct the artificial intelligence model (102) to generate the digital content (203, 403, 503, 612, 622) having the specific style.

6. The digital content generation method according to claim 1, wherein obtaining the style description data (202, 402, 502, 611, 621) corresponding to the target user (21, 41, 51, 61, 62) from the style description database (101) according to the identity identification data (201, 401, 501) comprises:
processing the identity identification data (201, 401, 501) through an embedded model (104) to normalize data content of the identity identification data (201, 401, 501); and
based on the processed identity identification data (201, 401, 501), querying the style description database (101) to obtain the style description data (202, 402, 502, 611, 621).

7. The digital content generation method according to claim 1, wherein obtaining the identity identification data (201, 401, 501) corresponding to the target user (21, 41, 51, 61, 62) comprises:
obtaining the identity identification data (201, 401, 501) corresponding to the target user (21, 41, 51, 61, 62) from a block chain network or an online storage space.

8. A digital content generation system (10), comprising:
a storage device (12), configured to store a style description database (101) and an artificial intelligence model (102); and
a processor, coupled to the storage device (12),
wherein the processor (11) is configured to:
establish the style description database (101);
obtain identity identification data (201, 401, 501) corresponding to a target user (21, 41, 51, 61, 62);
according to the identity identification data (201, 401, 501), obtain style description data (202, 402, 502, 611, 621) corresponding to the target user (21, 41, 51, 61, 62) from the style description database (101); and
use the style description data (202, 402, 502, 611, 621) to affect output of the artificial intelligence model (102), and enabling the artificial intelligence model (102) to generate digital content (203, 403, 503, 612, 622) having a specific style.

9. The digital content generation system (10) according to claim 8, wherein the style description database (101) is configured to store a plurality of style description data (202, 402, 502, 611, 621) corresponding to different users (21, 41, 51, 61, 62).

10. The digital content generation system (10) according to claim 8, wherein an operation of the processor (11) obtaining the style description data (202, 402, 502, 611, 621) corresponding to the target user (21, 41, 51, 61, 62) from the style description database (101) according to the identity identification data (201, 401, 501) comprises:
according to first identity identification data (201, 401, 501), obtaining first style description data (202, 402, 502, 611, 621) corresponding to a first user (21, 41, 51, 61, 62) from the style description database (101), wherein the first style description data (202, 402, 502, 611, 621) is configured to affect the output of the artificial intelligence model (102) and enable the artificial intelligence model (102) to generate first digital content (203, 403, 503, 612, 622) having a first style; and
according to second identity identification data (201, 401, 501), obtaining second style description data (202, 402, 502, 611, 621) corresponding to a second user (21, 41, 51, 61, 62) from the style description database (101), wherein the second style description data (202, 402, 502, 611, 621) is configured to affect the output of the artificial intelligence model (102) and enable the artificial intelligence model (102) to generate second digital content (203, 403, 503, 612, 622) having a second style, and the first style is different from the second style.

11. The digital content generation system (10) according to claim 8, wherein an operation of the processor (11) using the style description data (202, 402, 502, 611, 621) to affect the output of the artificial intelligence model (102), and enabling the digital content (203, 403, 503, 612, 622) generated by the artificial intelligence model (102) to have the specific style comprises:
obtaining a first operation instruction (410, 510) corresponding to the target user (21, 41, 51, 61, 62), wherein the first operation instruction (410, 510) is configured to control a subject of the digital content (203, 403, 503, 612, 622);
according to the first operation instruction (410, 510) and the style description data (202, 402, 502, 611, 621), generating a second operation instruction (420, 520), wherein the style description data (202, 402, 502, 611, 621) is configured to control a style of the digital content (203, 403, 503, 612, 622); and
based on the second operation instruction (420, 520), instructing the artificial intelligence model (102) to generate the digital content (203, 403, 503, 612, 622) having the specific style.

12. The digital content generation system (10) according to claim 11, wherein the storage device (12) is further configured to store a large language model (103), and an operation of the processor (11) instructing the artificial intelligence model (102) to generate the digital content (203, 403, 503, 612, 622) having the specific style based on the second operation instruction (420, 520) comprises:
processing the second operation instruction (420, 520) through the large language model (103) to normalize instruction content of the second operation instruction (420, 520); and
inputting the processed second operation instruction (420, 520) to the artificial intelligence model (102), so as to instruct the artificial intelligence model (102) to generate the digital content (203, 403, 503, 612, 622) having the specific style.

13. The digital content generation system (10) according to claim 8, wherein the storage device (12) is further configured to store an embedded model (104), and an operation of the processor (11) obtaining the style description data (202, 402, 502, 611, 621) corresponding to the target user (21, 41, 51, 61, 62) from the style description database (101) according to the identity identification data (201, 401, 501) comprises:
processing the identity identification data (201, 401, 501) through the embedded model (104) to normalize data content of the identity identification data (201, 401, 501); and
based on the processed identity identification data (201, 401, 501), querying the style description database (101) to obtain the style description data (202, 402, 502, 611, 621).

14. The digital content generation system (10) according to claim 8, wherein an operation of the processor (11) obtaining the identity identification data (201, 401, 501) corresponding to the target user (21, 41, 51, 61, 62) comprises:
obtaining the identity identification data (201, 401, 501) corresponding to the target user (21, 41, 51, 61, 62) from a block chain network or an online storage space.
